# EUROPEAN PATENT APPLICATION

(11) **EP 4 064 161 A1**
(43) Date of publication of application: **28.09.2022**
(21) Application number: 19953237.5
(22) Date of filing: 18.11.2019
(51) Int. Cl.: G06Q 20/12, G06Q 20/06, G06Q 30/02, G06Q 20/02

(54) **MEDIA DISTRIBUTION SYSTEM USING BLOCKCHAIN AND OPERATION METHOD THEREOF**

(71) Applicant: Hessegg, Inc., Seoul 05855 (KR)
(72) Inventor: SON, In Sik, Seongnam-Si, Gyeonggi-do 13614 (KR)
(74) Representative: FRKelly
(86) International application number: PCT/KR2019/015739
(87) International publication number: WO 2021/100885

(57) **Abstract**

The present invention provides a media distribution system using blockchain comprising: at least one member terminal connected to a blockchain network in which distribution information for media is stored, wherein the member terminal includes a producer terminal that uploads produced media to a control server, a distribution terminal that duplicates the media and re-uploads the media to the control server, or uploads, to the control server, the media reproduced by processing the media, and a consumer terminal that consumes the uploaded media; and the control server comprising a distribution intermediary unit that provides, to the consumer terminal, the media uploaded by the producer terminal or the distribution terminal and stores, in the blockchain network, a block including distribution information on the media, and a currency issuing unit that issues and pays a first cryptocurrency of a preset amount to the producer terminal, or issues and pays a second cryptocurrency of a preset amount to the distribution terminal, wherein the second cryptocurrency is a duplicate of the first cryptocurrency.

## Description

### [Technical Field]

The present invention relates to a media distribution system using blockchain and operation method thereof and more particularly, to a media distribution system for managing media distribution information using a block chain rather than an existing relay server, and an operating method thereof.

### [Background Art]

A social network refers to an online platform that creates social relationships through free communication, information sharing, and networking among users. Recently, various media (e.g., music, video, etc.) are freely shared between users across national borders through social networks.

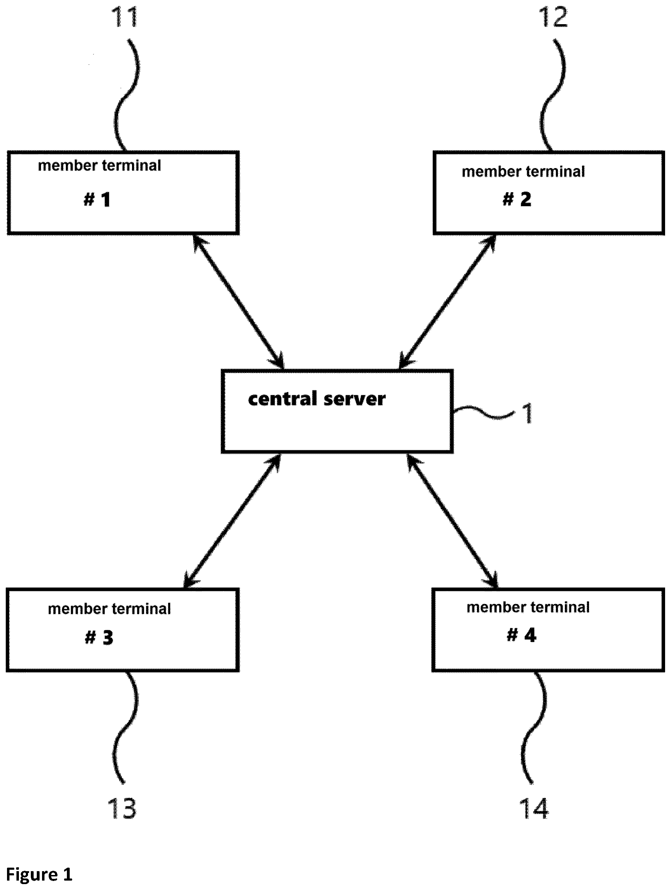

As shown in FIG. 1, in the sharing of media through such a social network role, the central server 1 provides a platform for media sharing, and a plurality of member terminals 11 to 14 access the central server 1 to upload media or copy, distribute, or reproduce the uploaded media, whereby media are freely distributed in social networks.

When the distribution of media in a social network is operated in a centralized manner, there is a problem in that the operating cost for the central server increases, and there is a restriction on the opportunity to enjoy various distribution services by being dependent on a specific e-commerce service.

In addition, since the centralized media distribution cannot secure the transparency of distribution history tracking and the reliability or transparency of media distribution information, there is a problem that even affects the distribution of advertising revenue generated by advertisements exposed together with the media, and so a method to solve such a problem is urgently required.

### [Disclosure]

### [Technical Problem]

An object of the present invention is to provide a media distribution system for managing media distribution information based on a block chain instead of a central server and based on this, transparently and reliably distributing advertisement revenue according to advertisements exposed together with the media. an operating method thereof.

### [Technical Solution]

In order to solve the above problem, the present invention provides a media distribution system using the blockchain,
comprising at least one member terminal connected to a block chain network in which distribution information on media is stored - the member terminal comprises a producer terminal for uploading the produced media to a control server, a distribution terminal for duplicating media and re-uploading it to a control server or uploading the media reproduced by processing the media to the control server, and a demand terminal for consuming the uploaded media - and a distribution intermediary unit that provides the media uploaded by the producer terminal or the distribution terminal to the demand terminal, and stores a block including distribution information on the media in the block chain network, and a control server comprising a currency issuing unit for issuing and paying a preset amount of first cryptocurrency to the producer terminal, or issuing and paying a preset amount of second cryptocurrency to the distribution terminal, wherein the second cryptocurrency duplicates the first cryptocurrency.

According to an embodiment, the quantity that the currency issuing unit issues and pays the second cryptocurrency to the distribution terminal can be determined according to the distribution step in which the media uploaded by the producer terminal is distributed by the distribution terminal

According to an embodiment, the control server further comprises a revenue distribution unit for distributing advertisement revenue generated by an advertisement exposed together with the media when the media is consumed to each of the member terminals, wherein the revenue distribution unit may distribute based on the sum of the first and second cryptocurrencies held by each of the member terminals.

According to an embodiment, the currency issuing unit may issue different types of cryptocurrencies for each media.

According to an embodiment, the control server further comprises a currency transaction intermediary unit for mediating transactions between different types of cryptocurrencies, wherein the currency transaction intermediary unit may target the first cryptocurrency as an independent transaction and not the second cryptocurrency as an independent transaction.

In addition, the present invention provides a method of operating a media distribution system using a block chain comprising the step of providing a block chain network in which distribution information for media is stored, wherein at least one member terminal is connected to the block chain network., the member terminal comprises a producer terminal for uploading the produced media to the control server, a distribution terminal for duplicating the media and re-uploading the media to the control server or uploading the media reproduced by processing the media to the control server and a demand terminal that consumes the uploaded media,
the step of providing the media uploaded by the producer terminal or the distribution terminal to the demand terminal, and storing a block including distribution information for the media in the block chain network; and
further comprising the step of issuing and paying a preset amount of first cryptocurrency to the producer terminal or issuing and paying a preset amount of second cryptocurrency to the distribution terminal, wherein the second cryptocurrency may duplicate the first cryptocurrency.

According to an embodiment, the amount that the control server issues and pays the second cryptocurrency to the distribution terminal may be determined according to a distribution step in which the media uploaded by the producer terminal is distributed by the distribution terminal In addition, the present invention provides a computer-readable recording medium for recording a computer program for executing the operating method of the media distribution system using the block chain.

### [Advantageous Effects]

According to the present invention, since distribution information of media is stored based on block chain, it is easy to track and manage the media distribution process, and since reliability or transparency of distribution information can be secured, distribution of advertisement revenue generated by advertisements exposed together with media can also ensure reliability or transparency.

In addition, because media distribution information is stored based on block chain rather than by a central server, it is possible to verify the distribution of advertising revenue and to reduce costs for managing media distribution information.

Additionally, since the distribution range of media in recent social networks is not limited to one country, when distributing advertising revenue according to the present invention, there is an effect that real-time remittance is possible at low cost by using cryptocurrency as a medium.

### [Description of Drawings]

Figure 1 1 is a block diagram of a centralized media distribution system.
Figure 2 is a block diagram of a block chain network according to an embodiment of the present invention.
Figure 3 is a block diagram of a media distribution system using a block chain according to an embodiment of the present invention.
Figure 4 is a block diagram of a control server according to an embodiment of the present invention.
Figure 5a is a diagram schematically illustrating a media distribution process according to an embodiment of the present invention.
Figure 5b is a schematic view of the coin paid to the distribution participant of Figure 5a.
Figure 6 is a step-by-step flowchart of a method of operating a media distribution system using a block chain according to an embodiment of the present invention.

### [Mode for Invention]

Hereinafter, the embodiments disclosed in the present specification will be described in detail with reference to the accompanying drawings, but the same or similar components are assigned the same reference numerals regardless of reference numerals and overlapping descriptions thereof will be omitted. The suffixes "module" and "part" for the components used in the following description are given or mixed in consideration of only the ease of writing the specification, and do not have distinct meanings or roles by themselves. In addition, in describing the embodiments disclosed in the present specification, if it is determined that detailed descriptions of related known technologies may obscure the gist of the embodiments disclosed in the present specification, the detailed description thereof will be omitted. In addition, the accompanying drawings are only for easy understanding of the embodiments disclosed in the present specification, and the technical feature disclosed herein is not limited by the accompanying drawings, and all changes, equivalents or substitutes should be understood to be included in the scope of the present invention.

Terms including an ordinal number, such as first, second, etc., may be used to describe various elements, but the elements are not limited by the terms.

The above terms are used only for the purpose of distinguishing one component from another.

When a component is referred to as being "connected" or "accessed" to another component, it should be understood that the other component may be directly connected or accessed to the other component, but other components may exist in between. On the other hand, when it is said that a certain element is "directly connected" or "directly accessed" to another element, it should be understood that no other element is present in the middle.

The singular expression includes the plural expression unless the context clearly dictates otherwise.

In this specification, it should be understood that terms such as "comprises" or "have" are intended to designate that the features, numbers, steps, operations, components, parts, or combinations thereof described in the specification exist, but does not preclude the possibility of addition or existence of one or more other features or numbers, steps, operations, components, parts, or combinations thereof.

### Media distribution system

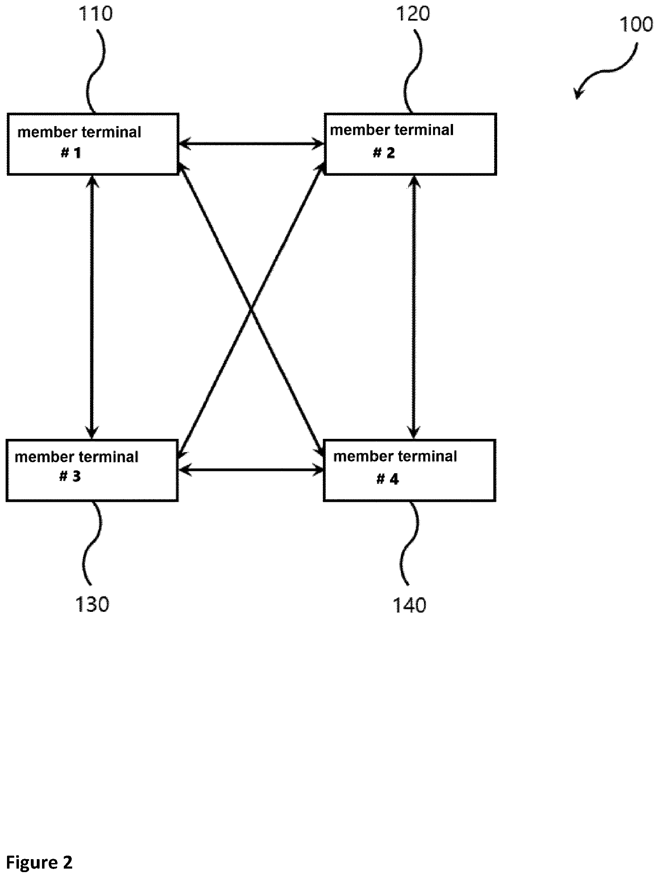

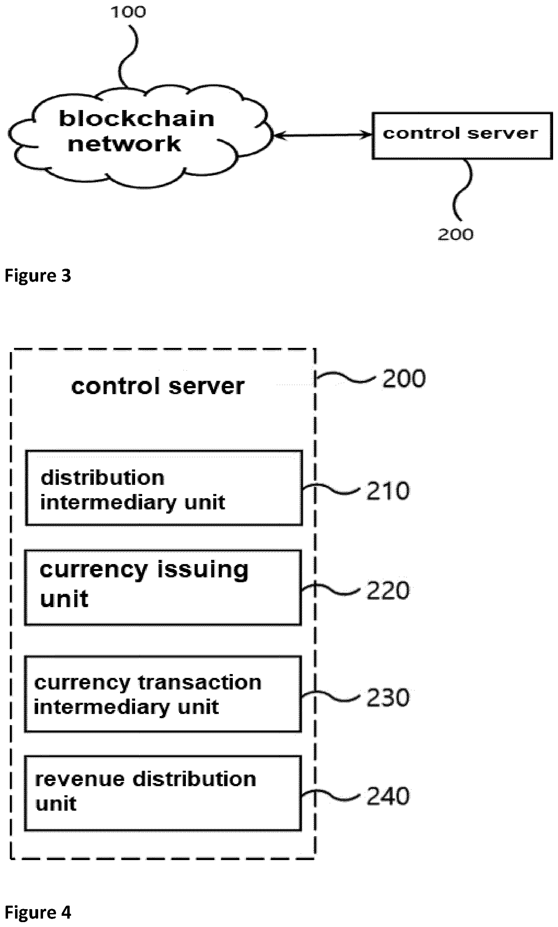

Figure 2 is a block diagram of a block chain network according to an embodiment of the present invention, and FIG. 3 is a block diagram of a media distribution system using a block chain according to an exemplary embodiment of the present invention. As shown in FIGs 2 and 3, a media distribution system using a block chain according to an embodiment of the present invention comprises at least one member terminal 110 to 140 connected to a block chain network, and a control server 200 that operates the block chain network in which distribution information on media distributed in social networks, etc. is stored.

Here, the member terminals 110 to 140 comprise a producer terminal for uploading the new produced media to a social network, etc., a distribution terminal for re-uploading the processed media or duplicating the newly produced media, and a demand terminal for consuming the uploaded media.

In addition, the control server 200, as shown in FIG. 4, may comprise a distribution intermediary unit 210 that provides the media uploaded by the producer terminal or the distribution terminal to the demand terminal and stores the block including the distribution information on the media in the block chain network, and a currency issuing unit 220 to issue and pay the first or second encryption currency to the producer terminal or the distribution terminal.

According to the present invention, since the distribution information of media is stored based on the block chain, it is easy to track and manage the media distribution process, and reliability and transparency of distribution information can be secured, so that distribution of advertisement revenue generated by advertisements exposed together with the media can also ensure reliability and transparency.

That is, since media distribution information is stored based on block chain instead of by a central server, it is possible to verify the distribution of advertising revenue and to reduce the cost for managing media distribution information.

In the media distribution system according to the present invention, as shown in FIG. 2, a plurality of member terminals 110 to 140 depart from the existing centralized data exchange method (refer to FIG. 1), and can store data in blocks, connect them in a chain form, and replicate and store them in nodes (e.g. terminals, storage, etc.) that are participants connected on the network.

In this way, the centralized central server (1) does not keep the distribution history records (or transaction records) of media but sends distribution details (or histories) to all members (or users) participating in media distribution and so in every media distribution, all participants share information and collate it to prevent forgery or falsification of data.

Of course, since the components shown in FIGS. 2 to 4 are not essential, a media distribution system or a control server having more or fewer components may be implemented.

Hereinafter, each component will be described.

In the block chain network 100 shown in FIG. 2, a plurality of member terminals 110 to 140 may be connected to each other as nodes, and as shown in FIG. 3, a control server 200 may be further connected to the block chain network 100 but is not limited thereto and may be connected so as to be able to communicate as a general node rather than a participant on the block chain network.

As described above, the member terminals 110 to 140 are terminals operated by users who want to upload or download media to a social network (including real-time streaming format) and are producers who upload newly created media to a social network and may comprise a producer terminal that uploads newly created media to a social network, a distribution terminal for duplicating and re-uploading new media or for uploading media reproduced by processing or editing the new media, and a demand terminal for downloading and consuming media uploaded to a social network.

Member terminals 110 to 140 are only classified into producer terminals, distribution terminals, and demand terminals according to the function or role performed by each terminal, and may be any one of a producer terminal, a distribution terminal, and a demand terminal according to circumstances.

In this case, the control server 200 may provide a platform to share the media between the member terminals 110 to 140 in the social network and provide it to the member terminals 110 to 140. Of course, depending on the embodiment, it may be implemented as another server in which the part for sharing or distribution of media is physically separated, and in this specification, the distribution intermediary unit 210 in the control server 200 is collectively referred to as the distribution intermediary unit 210 for easy description of the invention, but it is not intended to limit the scope of the present invention thereto.

When a producer terminal or a distribution terminal uploads media to the control server 200, the control server 200, specifically the distribution intermediary unit 210, publishes the uploaded media through a bulletin board, etc., and at least one user among the members consumes the uploaded media using the demand terminal, so that the distribution target media can be distributed.

Among the terms used in this specification, media distribution refers to a series of processes from production to consumption of media, and distribution information may refer to information about the media itself (e.g., media type, media form, media content, media producer, etc.) and information related to media distribution (for example, information about those who participated in distribution such as producers, distributors, reproducers, and consumers, various types of information throughout the distribution process such as access time of distribution participants to media, media upload time, and media download time, etc.).

On the other hand, the member terminals 110 to 140 participating in the block chain network 100 may have a platform that supports the block chain to enable direct media distribution between peer-to-peer in a distributed environment, for this purpose, it can have a storage space to store applications or distribution information for use of the block chain, and through this, the media or its distribution information is provided or consumed directly between the producer terminal or distribution terminal and the demand terminal without using the control server 200.

The block may comprise information on the target media itself, information related to media distribution, and conditions for media distribution (or consumption), etc. in the form of an electronic catalog, and since the conditions for media distribution (or consumption) are described in these electronic catalogs, the media consumer can have the contract be established immediately if they accept the above conditions.

In this way, by creating a smart contract between the producer terminal or the distribution terminal and the demand terminal, it is possible to enable a safe transaction at a fast and low cost between the transaction parties.

Member terminals 110 to 140 are connected to be able to communicate with another member terminal 110 to 140, and as described above, if the plurality of member terminals 110 to 140 can form a block chain network, the type is not limited, but for example, the member terminals 110 to 140 may be a mobile terminal such as mobile phones, smart phones, and laptop computers. digital broadcasting terminals, personal digital assistants (PDA), portable multimedia players (PMPs), slate PCs, tablet PCs, ultrabooks, etc. or a fixed terminal such as digital T.V. and a desk top computer or the like.

Meanwhile, the control server 200 is a device for operating the block chain network 100 and may mediate the distribution of media and/or transactions for cryptocurrency. as shown in FIG.4, in order to mediate the distribution of the media, the control server 200 may comprise a distribution intermediary unit 210 that provides the media uploaded or re-uploaded by the producer terminal or the distribution terminal to the demand terminal, and stores a block including distribution information on the media in the block chain network, and a currency issuing unit 220 for issuing and paying a preset amount of first cryptocurrency to the producer terminal, or issuing and paying a preset amount of second cryptocurrency to the distribution terminal, a currency transaction intermediary unit 230 that mediates trading transactions for cryptocurrency including the first cryptocurrency, and a revenue distribution unit 240 for distributing advertisement revenue generated by advertisements exposed together with the media during media consumption to the member terminals 110 to 140 . The currency issuing unit 220 may issue cryptocurrency corresponding to the newly created media. That is, the type of cryptocurrency issued by the currency issuing unit 220 may be different for each media, and the number of issued cryptocurrency may be preset at the time of initial issuance of the cryptocurrency, and the unit price of the issued cryptocurrency is preferably fixed to an existing currency such as KRW or USD to minimize price volatility.

When the media is first uploaded by the producer terminal, the issued cryptocurrency can be issued in the form of "[currency name]@[media name]", and its value can be fixed in the existing currency.

The currency issuing unit 220 according to an embodiment of the present invention may issue/pay the first cryptocurrency to a creator terminal that newly creates media, and a second cryptocurrency obtained by duplicating the first cryptocurrency may be issued/paid to a distribution terminal that duplicates or processes the previously generated media. When the media is distributed in this way, by duplicating and distributing the first cryptocurrency to the distribution terminal, it is possible to minimize the volatility of the value, such as the value of the first cryptocurrency being diluted according to the circulation.

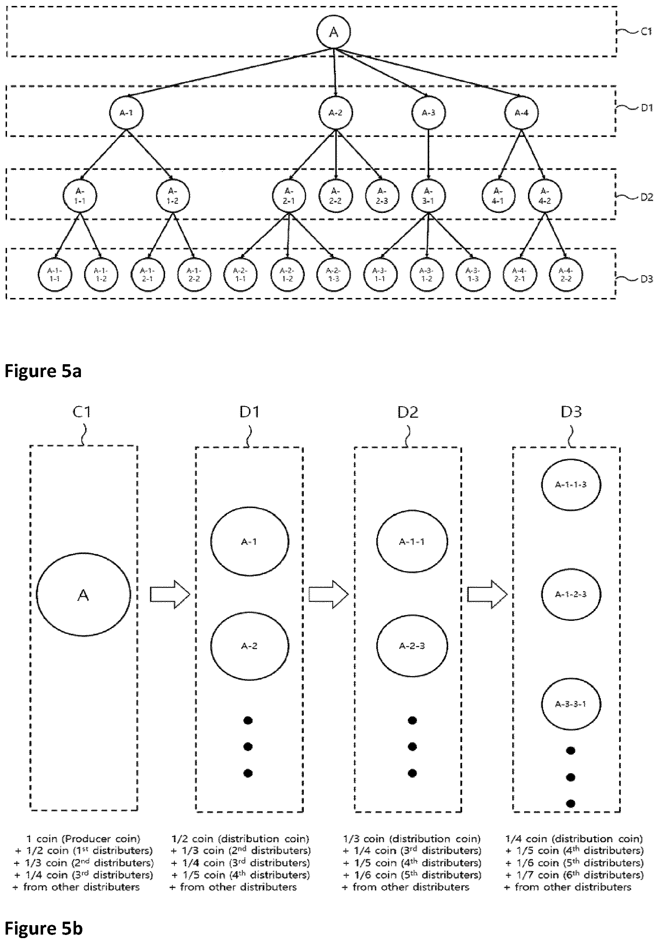

FIG.5a is a diagram schematically illustrating a media distribution process according to an embodiment of the present invention, and FIG. 5B is a diagram schematically illustrating a coin paid to a distribution participant in FIG. 5A.

The producer (C1) or the production terminal can upload the newly created media to the control server 200, etc., and the distributors (D1 to D3) or the distribution terminal can reproduce the media through duplication or processing or editing of the uploaded new media, and re-upload it to the control server 200, etc., and finally, a consumer (not shown) or a consumer terminal consumes the uploaded or re-uploaded media through playback, etc., and as shown in FIG. 5a , A multi-level tree structure can be formed by schematizing from the producer (C1) through the distributors (D1 to D3) to the consumer (not shown).

The currency issuing unit 220 may issue and provide the original first cryptocurrency to the producer (C1) or the production terminal and may issue and provide a second cryptocurrency that is a duplicate of the first cryptocurrency to the distributors D1 to D3 or the distribution terminal.

The second cryptocurrency is a duplicate of the first cryptocurrency and may have differences in purpose and properties. Accordingly, the first and second cryptocurrency may be distinguished from each other, and the second cryptocurrency may have a different name from the first cryptocurrency.

For example, as shown in FIG. 5b, the first cryptocurrency issued/paid to the production terminal may be named "A" as the original, and the second cryptocurrency issued/paid to the distribution terminal is a duplicate of the first cryptocurrency and may be named "A-1" or "A-1-1" or "A-1-1-1" depending on the steps.

At this time, the quantity that the currency issuing unit 220 issues and pays the second cryptocurrency to the distribution terminal may be determined according to the distribution step in which the media uploaded by the producer terminal is distributed by the distribution terminal.

Specifically, the currency issuing unit 220 may issue/pay the second cryptocurrency in the quantity corresponding to the distribution stage to the distribution terminal, and at this time, the quantity of the second cryptocurrency issued/paid to the distribution terminal may gradually decrease from the production terminal to the lower distribution stage.

For example, as shown in FIG. 5b, the currency issuing unit 220 may have one first cryptocurrency of the original issued/paid to the production terminal, and the second cryptocurrency of the duplicate issued/paid to the distribution terminal in the first distribution stage may be a second cryptocurrency of 1/2, which is the quantity corresponding to the distribution stage, and the second cryptocurrency of the replica issued/paid to the distribution terminal in the second distribution stage may be 1/3 of the second cryptocurrency, which is the quantity corresponding to the distribution stage, and the second cryptocurrency of the duplicate issued/paid to the distribution terminal in the third distribution stage may be 1/4 of the second cryptocurrency, which is the quantity corresponding to the distribution stage.

In addition, when the currency issuing unit 220 issues/pays the second cryptocurrency (e.g., 1/2, 1/3, 1/4, etc.) of the quantity corresponding to the distribution stage to the distribution terminal, an equal amount of the second cryptocurrency can be paid not only to the distribution terminal, but also to the distribution terminal and the producer terminal of the higher level.

As an example, when 1/2 of the second cryptocurrency corresponding to the distribution stage is issued/paid to the distribution terminal of the first distribution stage, the equivalent quantity of 1/2 of the second cryptocurrency can also be issued/paid to the producer terminal in the upper stage. Similarly, when 1/3 of the second cryptocurrency corresponding to the distribution stage is issued/paid to the distribution terminal in the second distribution stage, the equivalent quantity of 1/3 of the second cryptocurrency can also be issued/paid to the producer terminal and the primary distributor D1 (or the primary distribution terminal) in the upper stage. Likewise, when 1/4 of the second cryptocurrency corresponding to the distribution stage is issued/paid to the distribution terminal of the third distribution stage, 1/4 of the second cryptocurrency, the equivalent amount of 1/4 second cryptocurrency can also be issued/paid to producer terminals and primary and secondary distributors (D1, D2) (or primary and secondary distribution terminals) at higher levels.

The currency trading intermediary unit 230 may provide a trading platform to sell and buy cryptocurrencies.

The currency transaction intermediary unit 230 may also store a block including transaction information for cryptocurrency in the block chain network 100. Here, the transaction information may include a transaction party, a transaction target (type and number of cryptocurrency), a transaction unit price, a transaction period, and the like. According to one embodiment, the transaction of cryptocurrency also creates a smart contract between the cryptocurrency seller terminal and the cryptocurrency buyer terminal without going through the control server 200, so that a safe transaction can be performed quickly and at a low cost between the transaction parties.

According to an embodiment of the present invention, the currency transaction intermediary unit 230 may exchange currency between different types of cryptocurrencies or between cryptocurrency and real money.

Specifically, a person who has authority over cryptocurrency makes an offer to sell through the control server 200, specifically, the currency transaction broker 230, using the cryptocurrency seller terminal, and with respect to the cryptocurrency that has been put up for sale in the trading market, the purchaser of the cryptocurrency uses the cryptocurrency purchase terminal to make an offer to purchase through the control server 200, specifically, the currency transaction broker 230, and so the currency transaction intermediary unit 230 may make a transaction to be made when there is an offer for the same sale and purchase for the same type of cryptocurrency. As a result, the currency transaction broker 230 allows the sale and purchase of various types of cryptocurrencies to be made, so that the cryptocurrency in which the transaction is formed may have a market price.

Of course, as described above, the member terminals 110 to 140 participating in the block chain network 100 may comprise a cryptocurrency seller terminal and a cryptocurrency purchase terminal, and through this, the cryptocurrency seller terminal and the cryptocurrency purchase terminal can directly make a transaction without using the control server 200. The block may contain information on the cryptocurrency to be circulated and conditions for transactions in the form of an electronic catalog, and since these electronic catalogs describe the conditions for making a transaction, the buyer or borrower may have the contract entered immediately upon acceptance of these conditions.

By creating a smart contract between the cryptocurrency seller terminal and the cryptocurrency purchase terminal in this way, it is possible to enable fast and secure transactions between transaction parties at low cost.

On the other hand, as described above, the first and second cryptocurrencies issued by the currency issuing unit 220 may have different issuance purposes and properties from each other, and the first cryptocurrency is an independent transaction unlike the second cryptocurrency. However, it is desirable that the second cryptocurrency is not subject to independent transaction.

This is because, if the second cryptocurrency is an independent transaction object, it can affect the value of the first cryptocurrency designed to minimize volatility. After all, as will be described later, the second cryptocurrency is preferably used for the purpose of distributing advertisement revenue generated from advertisements exposed together with the media during media consumption.

The revenue distribution unit 240 may distribute the generated advertisement revenue to the member terminals 110 to 140 when revenue is generated by the media, that is, when advertisement revenue is generated by an advertisement exposed together with the media during media consumption.

Among the cryptocurrencies owned by each of the member terminals 110 to 140, it is possible to distribute based on the sum of the first and second cryptocurrencies corresponding to the media.

That is, advertising revenue may be distributed/paid in proportion to the total ratio of the first and second cryptocurrencies each of the member terminals 110 to 140 possesses.

At this time, the person who operates the control server 200 may acquire a fee according to a predetermined standard such as a fixed amount or a fixed rate when media is distributed or when a transaction for cryptocurrency occurs.

On the other hand, in order to mediate the distribution of media, the control server, although not shown in the drawing, may comprise a currency storage unit capable of storing at least one type of cryptocurrency, and may store cryptocurrency as needed, and the stored cryptocurrency can be used as a payment method when distributing media and/or brokering cryptocurrency transactions.

In addition, the value storage unit stores as cryptocurrencies, and some of the stored cryptocurrencies can be credited to participants in the blockchain network, and the cryptocurrencies accumulated by the participants can be converted into existing real currency or other types of cryptocurrencies.

### Operation method of the media distribution system

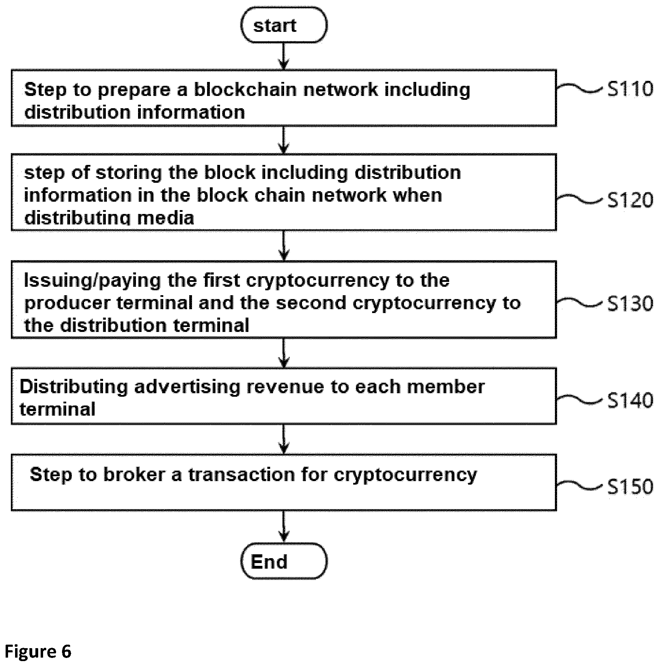

Figure 6 is a step-by-step flowchart of a method of operating a media distribution system using a block chain according to an embodiment of the present invention. As shown in FIG. 6, the method of operating a media distribution system using a block chain according to an embodiment of the present invention may comprise a step (S110) of preparing a block chain network 100 in which distribution information on media is stored,
a step (S120) of providing, by a control server 200, the media uploaded by the producer terminal or the distribution terminal to the demand terminal, and storing a block including distribution information on the media in the block chain network, and
a step (S130) of issuing and paying, by the control server 200, a preset amount of first cryptocurrency to the producer terminal or issuing and paying a preset amount of second cryptocurrency to the distribution terminal.

At this time, the second cryptocurrency may be a duplicate of the first cryptocurrency, and the amount to be paid by issuing the second cryptocurrency to the distribution terminal may be determined according to a distribution step in which the media uploaded by the producer terminal is distributed by the distribution terminal.

In addition, according to an embodiment of the present invention, the control server 200 may further include a step (S140) of distributing advertisement revenue generated by advertisements exposed together with the media during media consumption to each of the member terminals 110 to 140, and in this case, the advertisement revenue distribution may be based on the sum of the first and second cryptocurrencies each of the member terminals 110 to 140 holds.

In addition, according to an embodiment of the present invention, the control server 200 may further comprise a step (S150) of mediating different types of cryptocurrency transactions, and in this case, it is preferable that the transaction target is the first cryptocurrency, not the first cryptocurrency and the second cryptocurrency. The description of each step of the operation method of the media distribution system using the block chain overlaps with the description of the media distribution system using the block chain, so a detailed description will be omitted and will be replaced therewith.

### Computer readable recording medium

The method of operating a media distribution system using a block chain according to an embodiment of the present invention described above is implemented in the form of program instructions that can be executed through various computer components and recorded in a computer-readable recording medium.

The computer-readable recording medium may comprise program instructions, data files, data structures, etc. alone or in combination. The program instructions recorded on the computer-readable recording medium may be specially designed and configured for the present invention or may be known and available to those skilled in the computer software field. Examples of the computer-readable recording medium include hard disks, magnetic media such as floppy disks and magnetic tapes, optical recording media such as CD-ROMs and DVDs, and magneto-optical media such as floppy disks and hardware devices specially configured to store and execute program instructions, such as ROM, RAM, flash memory, and the like. Examples of program instructions comprise not only machine code such as generated by a compiler, but also high-level language code that can be executed by a computer using an interpreter or the like. The hardware device may be configured to operate as one or more software modules to perform processing according to the present invention, and vice versa.

As above, preferred embodiments of the present invention have been described in detail with reference to the drawings. The description of the present invention is for illustration, and those of ordinary skill in the art to which the present invention pertains will understand that it can be easily modified into other specific forms without changing the technical spirit or essential features of the present invention. Accordingly, the scope of the present invention is indicated by the claims described later rather than the detailed description, and all changes or modifications derived from the meaning, scope, and equivalent concept of the claims should be construed as being included in the scope of the present invention.

## Claims

1. A media distribution system using the blockchain, comprising
at least one member terminal connected to a block chain network in which distribution information on media is stored, wherein the member terminal comprises a producer terminal for uploading the produced media to a control server, a distribution terminal for duplicating media and re-uploading it to a control server or uploading the media reproduced by processing the media to the control server, and a demand terminal for consuming the uploaded media;
a distribution intermediary unit that provides the media uploaded by the producer terminal or the distribution terminal to the demand terminal, and stores a block including distribution information on the media in the block chain network; and
a control server comprising a currency issuing unit for issuing and paying a preset amount of first cryptocurrency to the producer terminal or issuing and paying a preset amount of second cryptocurrency to the distribution terminal, wherein the second cryptocurrency duplicates the first cryptocurrency.

2. The media distribution system of claim 1, wherein the quantity that the currency issuing unit issues and pays the second cryptocurrency to the distribution terminal is determined according to the distribution step in which the media uploaded by the producer terminal is distributed by the distribution terminal.

3. The media distribution system of claim 2, wherein the control server further comprises a revenue distribution unit for distributing advertisement revenue generated by an advertisement exposed together with the media when the media is consumed to each of the member terminals, wherein the revenue distribution unit distributes based on the sum of the first and second cryptocurrencies held by each of the member terminals.

4. The media distribution system of claim 1, wherein the currency issuing unit issues different types of cryptocurrencies for each media.

5. The media distribution system of claim 4, wherein the control server further comprises a currency transaction intermediary unit for mediating transactions between different types of cryptocurrencies, wherein the currency transaction intermediary unit targets the first cryptocurrency as an independent transaction and not the second cryptocurrency as an independent transaction.

6. A method of operating a media distribution system using a block chain, comprising
the step of preparing a block chain network in which distribution information for media is stored, wherein at least one member terminal is connected to the block chain network., wherein the member terminal comprises a producer terminal for uploading the produced media to a control server; a distribution terminal for duplicating the media and re-uploading the media to the control server or uploading the media reproduced by processing the media to the control server; and a demand terminal that consumes the uploaded media,
the step of by the control server, providing the media uploaded by the producer terminal or the distribution terminal to the demand terminal and storing a block including distribution information for the media in the block chain network; and
further comprising the step of issuing and paying a preset amount of first cryptocurrency to the producer terminal or issuing and paying a preset amount of second cryptocurrency to the distribution terminal, wherein the second cryptocurrency duplicate the first cryptocurrency.

7. The method of claim 6, wherein the amount that the control server issues and pays the second cryptocurrency to the distribution terminal is determined according to a distribution step in which the media uploaded by the producer terminal is distributed by the distribution terminal.

8. A computer-readable recording medium for recording a computer program for executing the operating method of the media distribution system using the block chain according to claim 7.
